# EUROPEAN PATENT APPLICATION

(11) **EP 4 531 378 A1**
(43) Date of publication of application: **02.04.2025**
(21) Application number: 23200980.3
(22) Date of filing: 29.09.2023
(51) Int. Cl.: H04L 67/10, H04L 41/0803, H04L 67/00, H04L 69/22, H04L 41/40

(54) **METHOD TO CONFIGURE A NETWORK FOR IN-NETWORK COMPUTING OF NETWORK DATA, METHOD TO OPERATE A NETWORK DEVICE, FUNCTION ORCHESTRATION MODULE FOR A NETWORK, NETWORK DEVICE FOR A NETWORK, NETWORK, COMPUTER PROGRAM PRODUCT AND COMPUTER-READABLE STORAGE MEDIUM**

(71) Applicant: Siemens Aktiengesellschaft, 80333 München (DE)
(72) Inventor: Sauer, Markus, 81739 München (DE); Zeiger, Florian, 85635 Höhenkirchen-Siegertsbrunn (DE)
(74) Representative: Siemens Patent Attorneys

(57) **Abstract**

The invention is related to a method to configure a network (9) for in-network computing of network data (11), comprising the following steps performed by a function orchestration module (8) of the network (9): generating a compute function (14), configured to process the specific network data (11) according to the data processing specification (10); generating a network function (17) for the network device (1), wherein the network function (17) is configured to forward the specific network data (11) received by the network device (1) to the compute function (14) operated by the network device (1) and to forward the processed specific network data (11); and providing the compute function (14) and the network function (17) to the network device (1).

## Description

The invention is concerned with a method to configure a network for in-network computing of network data, a method to operate a network device for in-network computing of network data, a function orchestration module for a network, a network device for a network, a network, a computer program product and a computer-readable storage medium.

Real-time and near real-time processing of data/packets/messages in industrial distributed systems is essential for many industrial use cases and applications. Whereas in the past, data was processed in computing systems after being transmitted to user applications via a number of communication devices, recent developments in communication network systems allow parts of the processing of a distributed application to be distributed to the network devices. Network devices are increasingly capable of performing additional functions in addition to packet forwarding. In the network, processing is not only possible on intelligent edge devices used for distributed sensor data aggregation, but also on network devices capable of performing functions on data packet payloads or sensor data values. Of course, packet payload manipulation must be transparent, secure, and reliable. For this reason, data can be pre-processed as it travels over a network device, which can include filtering, data fusion, or event detection. This processing on network devices is called in-network computing.

However, there is no centralized mechanism for orchestrating the processing of network data by the network devices on the network.

It is an objective of the present invention to provide a solution for the orchestration of in-network processing of network data.

This objective is achieved by the respective subject matter of the independent claims. Further implementations and preferred embodiments are subject matter of the dependent claims.

A first aspect of the present invention is related to a method to configure a network for in-network computing of network data. The method comprises the following steps performed by a function orchestration module of the network.

A first step comprises a receiving of a data processing specification, wherein the data processing specification describes a processing to be performed on specific network data on a network path from a source device to a target device of the network. In other words, in the first step the function orchestration module of the network receives the data processing specification. The data processing specification is related to the processing of the specific network data along a path connecting the source device and the target device through the network. The network path comprises the network device. The network data may comprise sensor data, in particular raw data or other data provided by the source device. The data processing specification may specify how the network data has to be processed during the transmission of the network data from the source device to the target device.

A second step of the method comprises generating a compute function for the network device configured to process the specific network data according to the data processing specification. In other words, the function orchestration module generates the compute function, wherein the compute function is configured to process the specific network data according to the data processing specification. The data processing may be related to payload of the network data and may include filtering or performing complex calculations on the network data.

In a next step, the network device of the network is selected along the network path connecting the source device and the target device to perform the compute function. In other words, the network path connecting the source device to the target device passes through one or more network devices of the network. The function orchestration module of the network selects the network device to operate the compute function. In other words, the function orchestration module selects the network device of the network on the network path to perform the compute function. The network device may be selected depending on a computing capacity of the respective network device, a current load of the respective network device, or capabilities of the respective network device.

A next step comprises generating a network function for the network device. The network function is configured to forward the specific network data received by the network device to the compute function operated by the network device and to forward the processed specific network data. In other words, the network device includes a programmable forwarding plane. The function orchestration module of the network generates the network function that may be operated by the network device in the the programmable forwarding plane of the network device. The network function may be configured to identify the specific network data to be forwarded to the compute function operated by the network device. In other words, the network device may receive data from the network at a respective network function operated in the programmable forwarding plane, which may be configured to receive data from the network and to relay the data. The network function operated in the programmable forwarding plane is configured to identify the specific network data received by the network device and to forward the specific network data to the compute function operated by the network device. The identification and/or the forwarding of the specific network data may depend on header data and/or meta data of the network data. The network function or another network function operated in the programmable forwarding plane is configured to receive the processed network data from the compute function and to forward the processed network data to the network according to a configuration of the network function. The processed network data may be forwarded to a subsequent network device.

A next step comprises providing the compute function and the network function to the network device. In other words, the network orchestration module provides the compute function and the network function to the network device. The network device may execute the compute function provided by the function orchestration module to process the payload of the specific network data. The network device may execute the network function in its forwarding plane to allow a provision of the specific network data to the compute function. The network function may also receive the processed network data from the compute function and may forward the processed data to the network.

In summary, the idea of the invention is that the function orchestration module generates a bundle for the respective network device, comprising the at least one compute function and the at least one network function. The at least one compute function is configured to process the payload of the specific network data. The at least one network function is configured to transmit the specific network data, received by the network device to the at least one compute function operated by the network device. The at least one network function is configured to transmit the processed network data, provided by the at least one compute function to the network. The at least one network function may for example send the processed network data to at least one other network device of the network or the target device.

The invention has the advantage that the in-network computing of network data may be configured by a central module.

According to a further embodiment of the invention, the data processing specification describes a processing to be performed on the specific network data sent from at least two of the source devices to the target device via the network device of the network. In other words, the data processing specification describes that the specific network data is provided from two of the source devices of the network to the target device of the network. The data processing specification describes the processing to be performed on the specific network data provided by the at least two source devices. In other words, the data processing specification describes the processing of the network data along two network paths through the network connecting the respective source devices and the target device by the network device of the network. The network device may be a junction of the two network paths. The data processing comprises processing of network data provided by the at least two of the source devices. The data processing may, for example, comprise a combination of the network data provided by the respective source devices. The function orchestration module may provide one or more of the network functions for receiving the specific network data from the at least two source devices and for forwarding the specific network data to a same compute function of the network device. The same or another network function may receive the processed network data and may send the processed network data to another of the network devices or the target device. The embodiment has the advantage that pre-processing of network data provided by more than one of the source devices may be configured by the function orchestration module.

According to a further embodiment of the invention, the data processing specification describes a processing to be performed on the specific network data sent from the source device to at least two of the target devices via the network device of the network. In other words, the data processing specification describes a respective processing of network data to be provided to respective target devices. It is possible that the source device comprises a sensor which provides sensor data as the network data. The data processing specification may describe that a first of the target devices is to receive filtered network data, while a second of the two target devices is to receive unfiltered network data. The function orchestration module may provide one or more of the network functions for receiving the specific network data and for forwarding the specific network data to one or more of the compute functions of the network device. The compute functions may be specific for the respective target device. The same or another network function may receive the processed network data from the one or more compute functions and may send the processed network data to the specific target devices. The function orchestration module may generate one or more compute functions, each of the compute functions being configured to process the respective specific network data for the respective target device. The embodiment has the advantage that a respective preprocessing of the network data for the at least two target devices can be configured by the function orchestration module.

According to a further embodiment of the invention, the method comprises a configuration of an authentication, authorization and accounting module of the network to set up a security mechanism for restricting access to the specific network data. A next step comprises providing a security configuration to the compute function to obtain the security mechanism to gain access to the specific network data restricted by the security mechanism. In other words, the network orchestration module configures the authentication, authorization, and accounting module to provide a security mechanism for the specific network data. The security mechanism can be configured to restrict access to the specific network data to authorized entities. For example, the security mechanism may include encryption of the specific network data. In a next step, the network orchestration module provides the security configuration to the compute function. The security configuration is configured to allow the compute function to access the specific network data by solving the security mechanism. For example, the security configuration may include a key to decrypt the specific network data. The embodiment has the advantage that access to the specific network data can be restricted to the compute function.

According to a further embodiment of the invention, the generating the compute function comprises steps of retrieving a compute function template from a function repository module in accordance with the data processing specification. In other words, the network comprises a function repository module, wherein compute function templates are stored in the function repository module. The network orchestration module is configured to retrieve the compute function template from the function repository module in accordance with the data processing specification. The compute function templates may define predefined compute functions, wherein parameters of the compute function templates must be incorporated by the network orchestration module. In a next step, the network orchestration module configures the compute function template according to the data processing specification. In other words, the network orchestration module may set parameters of the compute function template to perform data processing according to the data processing specification. The network orchestration module may also retrieve multiple compute function templates and combine the compute function templates into the compute function. In a final step, the network orchestration module generates the compute function based on the configured compute function template. The embodiment has the advantage that compute function templates can be provided by the function repository. The embodiment has the advantage that the generation of compute functions is simplified.

According to a further embodiment of the invention the compute function is configured as an application running in an operation system of the network device. In other words, the network orchestration module is configured to generate the compute function as the application running in the operation system of the network device.

According to a further embodiment of the invention the compute function is configured as an application running on a data processing unit of a network interface card of the network device. In other words, the network orchestration module is configured to generate the compute function as the application to operate on the data processing unit of the network interface card of the network device.

According to a further embodiment of the invention, the selection of the network device depends on a network load caused by the selection of the network device. In other words, the network orchestration module is configured to estimate a network load caused by selecting a particular network device for network data processing. The network orchestration module may be configured to compare the respective network loads of the respective network devices and select a network device that causes the lowest network load. The embodiment has the advantage that a network load on the network can be reduced.

A second aspect of the invention relates to a method of operating a network device for in-network computing of network data.

The method comprises the following steps performed by a network device of the network. The network device of the network may be configured during a method according to the first aspect of the invention.

In a first step, the network device receives specific network data through a network function, operated in a programmable forwarding plane of the network device by the network device. In other words, the network device provides a programmable forwarding plane for operating the network function. The network device receives the specific network data through the network function operated in the programmable forwarding plane.

In a next step, the network function in the programmable forwarding plane forwards the specific network data to a compute function operated by the network device.

In a next step, the specific network data is processed by the compute function operated by the network device. The processing may be related to a payload of the specific network data.

After the specific network data is processed by the compute function, the compute function provides the processed specific network data to the programmable forwarding plane. The network function operated in the programmable forwarding plane forwards the processed specific network data to the network.

A third aspect of the invention relates to a function orchestration module for a network.

The function orchestration module is configured to receive a data processing specification, the data processing specification describing a processing to be performed on specific network data sent from a source device to a target device along a network path of the network.

The function orchestration module is configured to generate a compute function configured to process the specific network data according to the data processing specification. The function orchestration module is configured to select a network device of the network along the network path connecting the source device and the target device to operate the compute function.

The function orchestration module is configured to generate a network function for a programmable forwarding plane of the network device, the network function configured to forward the specific network data received by the network device through the compute function operated by the network device and to forward the processed specific network data. The function orchestration module is configured to provide the compute function and the network function to the network device.

A fourth aspect of the present invention relates to a network device for a network. The network device is configured to receive specific network data through a programmable forwarding plane of the network device. The network device is configured to operate a network function in a programmable forwarding plane of the network device. The network device is configured to forward the specific network data to a compute function operated by the network device using the network function. The network device is configured to process the specific network data by the compute function. The network device is configured to provide the processed specific network data of the compute function to the programmable forwarding plane. The network device is configured to forward the processed specific network data using the network function.

A fifth aspect is related to a network comprising a function orchestration module and a network device.

A sixth aspect of the invention is related to a computer program product comprising program code for performing a method according to the first aspect. The computer program product may also be regarded to a computer program.

A seventh aspect of the invention is related to a computer-readable storage medium comprising at least the computer program product according to the sixth aspect.

For use cases or use situations which may arise in the methods and which are not explicitly described here, it may be provided that, in accordance with the methods, an error message and/or a prompt for user feedback is output and/or a default setting and/or a predetermined initial state is set.

Independent of the grammatical term usage, individuals with male, female or other gender identities are included within the term.

The function orchestration module and the network device may comprise computing devices to perform steps of the methods.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more applicationspecific integrated circuits, ASIC, one or more fieldprogrammable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.
- FIG 1: shows a schematic illustration of network devices according to the state of the art;
- FIG 2: shows a schematic illustration of a function orchestration module and a network device of a network;
- FIG 3: shows a schematic illustration of a network; and
- FIG 4: shows a schematic illustration of a method to configure a network for in-network computing of network data.

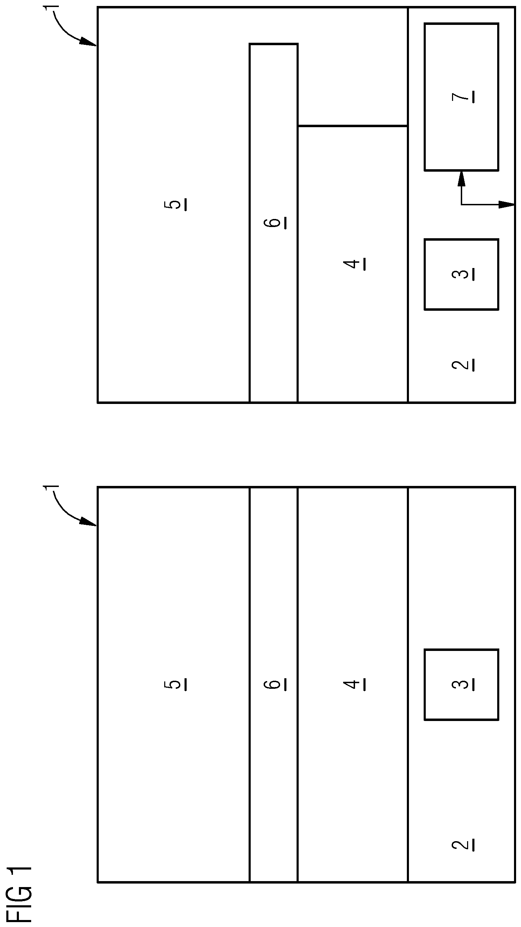

FIG 1 shows a schematic illustration of network devices according to the state of the art.

The network devices 1 may comprise a network device hardware 2, comprising a network interface card 3. The network devices 1 may operate an operation system network stack 4. The network devices 1 may operate operation systems 5. The operation system 5 may run applications 6. The right of the network devices 1 may provide a programmable forwarding plane 7.

Current implementations of in-network processing typically focus on leveraging the intelligence of sensors to not only capture and transmit raw data, but also pre-process the network data 11. Typical applications include filtering or event detection. Real data processing, such as performing complex calculations on data packets of a specific type/application, is not performed within the network 9.

State-of-the-art network devices 1, as shown in FIG. 1, are equipped with a programmable forwarding plane 7 functionality to extend the feature set while performing all necessary actions in data packet handling and forwarding.

There is no orchestration mechanism to match network devices 1, functions, and user application requirements.

The proposed mechanism now allows complex calculations based on network data 11. A programmable forwarding plane 7 is dynamically capturing the data packets of interest for further processing.

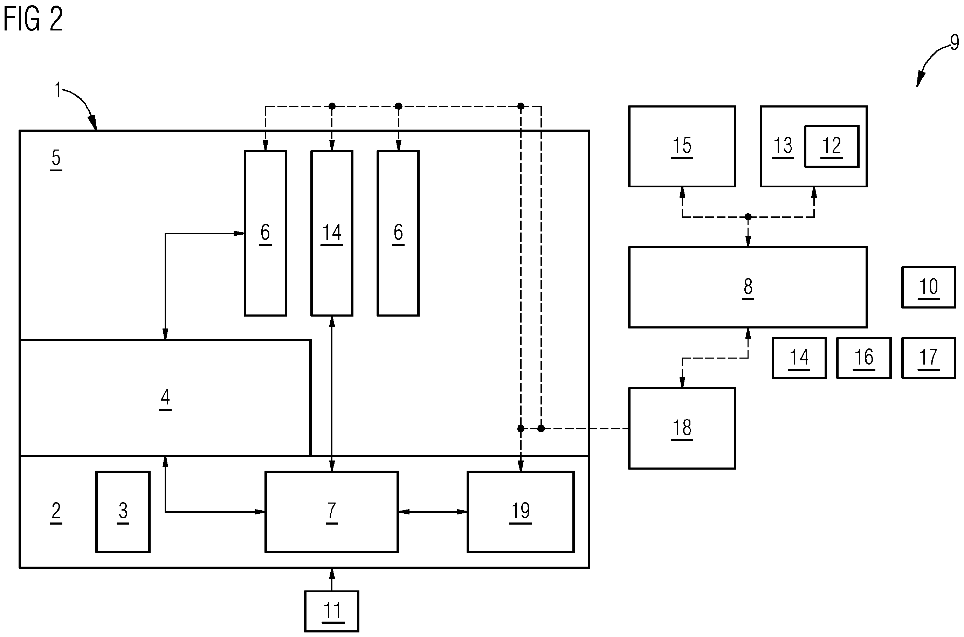

FIG 2 shows a schematic illustration of a function orchestration module and a network device of the network.

The function orchestration module 8 may be configured to receive a data processing specification 10. The data processing specification 10 may define a requested processing of network data 11. The function orchestration module 8 may be configured to select a compute function template 12 from a function repository module 13. The selection of the specific compute function template 12 may depend on the data processing specification 10. The function orchestration module 8 may be configured to set parameters of the compute function template 12 according to the data processing specification 10. The function orchestration module 8 may be configured to generate the compute function 14 based on the compute function template 12. The function orchestration module 8 may be configured to select a network device 1 of the network 9 along a network path 22 connecting the source device 20 and the target device 21 to operate the compute function 14. The function orchestration module 8 may be configured to generate a network function 17 for the network device 1, wherein the network function 17 may be configured to forward the specific network data 11 received by the network device 1. The network function 17 may be operated by the network device 1 in the programmable forwarding plane 7. The function orchestration module 8 may be configured to configure an authentication, authorization and accounting module 15 of the network 9 to set up a security mechanism for restricting access to the specific network data 11. The function orchestration module 8 may be configured to provide a security configuration 16 to the compute function 14 to solve the security mechanism to gain access to the specific network data 11 restricted by the security mechanism. The function orchestration module 8 may also be configured to provide the compute function 14 and the network function 17 to the network device 1 via a function deployment interface 18. The network device 1 may receive the compute function 14 and operate the compute function 14. The compute function 14 may be an application operated in the operation system 5 of the network device 1. The compute function 14 may also be an application operated in a data processing unit 19 of the network hardware. The network device 1 may operate the network function 17 in its programmable forwarding plane 7. The network function 17 operated in the programmable forwarding plane 7 may be configured to receive the specific network data 11 and to forward the specific network data 11 to the compute function 14. The network function 17 in the programmable forwarding plane 7 may also be configured to receive the processed network data 11 from the compute function 14 and to forward the processed network data 11 to another network device 1 of the network 9. The processing of the network data 11 may also be partially performed by the network function 17.

While current in-network computing approaches only allow manual deployment and configuration of in-network computing functions to specific network devices 1, the mechanism in this approach proposes a function orchestration module 8 that can be used by a user application. The function orchestration module 8 provides the following key features.

The function orchestration module 8 provides the required compute function 14 to be executed on the network data 11 transmitted by the user application.

The function orchestration module 8 creates and deploys a compute function 14 instance to an appropriate network device 1 according to the defined user application requirements specified in the data processing specification 10 and the metadata provided with the function.

The function orchestration module 8 creates and deploys an appropriate network function 17 to the appropriate network device 1.

The function orchestration module 8 manages the user application's access to the network data 11 to be processed by the compute function 14.

Such a mechanism is extremely important when network devices 1 have certain processing capabilities but are not explicitly high-performance compute hosts. Application examples include industrial networks 9, large-scale infrastructure communication systems, and satellite networks 9. The function orchestration module 8 may be configured to receive instructions from a user application regarding data processing, e.g. filtering, fusion of network data 11, and may create an appropriate compute function 14 for processing. For example, if a low-pass filter is to be applied, a template for a low-pass filter can be retrieved from the function repository module 13 and parameterized according to the user application's requirements.

The user application also usually restricts access to the network data 11 and requires transparency and clear access rules regarding its data/packets. Therefore, the function orchestration module 8 can be configured to interact with an authentication, authorization and accounting module 15 to set up the required security mechanisms, e.g. PKI, access control, encryption, certificates. Of course, the compute function 14 created above will be configured for these security mechanisms. Finally, the programmable forwarding layer of the network device 1 must be configured to transport network data 11 between the network 9 and the compute function 14.

The function repository module 13 can contain compute function templates 12 for generating the compute functions 14 that can be used by the function orchestration module 8.

The authentication, authorization and accounting module 15 may provide security mechanisms and infrastructure, e.g. identity provider, PKI infrastructure, certification authority, certificates, access control. These mechanisms and/or security services can then be used by the function orchestration module 8 and the deployed compute functions 14 and network functions 17.

The compute function 14 can be deployed on network devices 1 and can be realized either as an application running in the operating system 5 or as an application running on a data processing unit 19 of a network interface card 3. The compute function 14 receives network data 11 packets from the programmable forwarding plane 7 directly or through the operating system network stack 4. The function must then pass through authentication, authorization, and accounting to validate that the correct compute function 14 is processing the correct network data 11 stream packet on the correct network device 1. After successful authentication, authorization, and accounting, the compute function 14 can process the payload. The compute function 14 may also receive the network data 11 from different data packet streams, for example, to perform data fusion tasks. After processing, the network data 11 containing the result of the processing may be sent to the target device 21. Therefore, the compute function 14 can create a new data packet, including optional security mechanisms such as encryption, and send it to the programmable forwarding plane 7 for further packet handling.

The network function 17 may consist of executable code that can run in the programmable forwarding plane 7 of a network device 1. This configuration artifact is created by the function orchestration module 8 and ensures that the data packets of interest from the network data 11 are captured and forwarded to the appropriate function for processing, where the compute function 14 may be either a function running in the operating system or a function on a data processing unit 19.

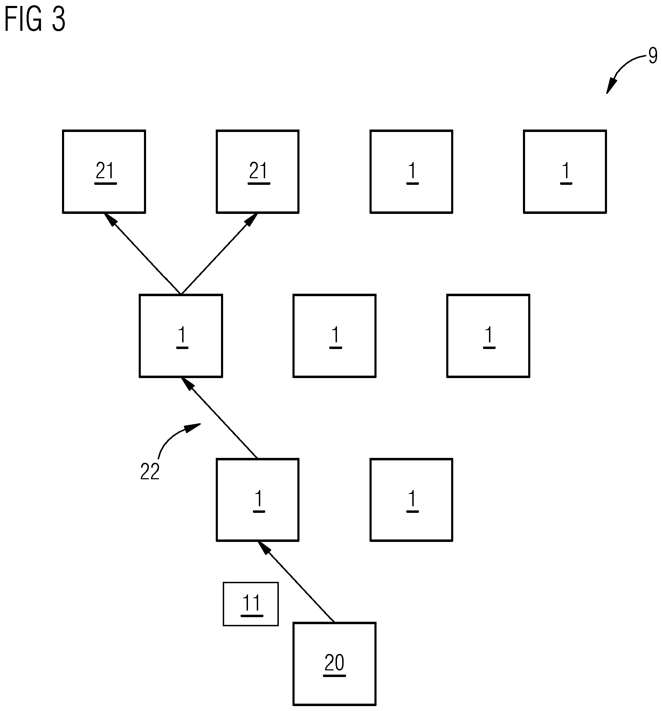

FIG 3 shows a schematic illustration of a network 9.

The network 9 may comprise network devices 1. The function orchestration module 8 may receive the data processing specification 10. The data processing specification 10 may define the processing of network data 11 provided by a source device 20 through a transmission of the network data 11 to two target devices 21. The function orchestration module 8 may be configured to select a path 22 connecting the source device 20 with the target devices 21. The path 22 may be provided by network devices 1 of the network 9. To allow the processing of the network data 11 the function orchestration module 8 may select one of the network devices 1. The function orchestration module 8 may generate a compute function 14 to process the network data 11. The function orchestration module 8 may provide the compute function 14 to the selected network device 1. The function orchestration module 8 may also generate the network function 17 and provide the network function 17 to the selected network device 1. The selected network device 1 may operate the compute function 14 and process the network data 11. Therefore, the target devices 21 may receive the processed network data 11.

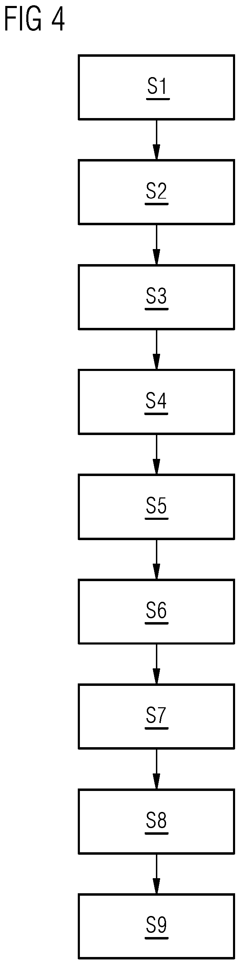

FIG 4 shows a schematic illustration of a method to configure a network 9 for in-network 9 computing of network data 11.

A first step S1 of the method comprises a reception of a data processing specification 10 by a function orchestration module 8 of the network 9. The data processing specification 10 describes a processing to be performed on a specific network data 11 sent from the source device 20 to a target device 21 via network device 1 of the network 9.

In a step S2 the function orchestration module 8 may generate a compute function 14 configured to process a specific network data 11 according to the data processing specification 10.

In a step S3 the function orchestration module 8 may select network device 1 of the network 9 along a network 9 path 22 connecting the source device 20 and the target device 21 to operate the compute function 14.

In a step S4 the function orchestration module 8 may generate a network function 17 for the network device 1 performing the forwarding of the specific network data 11 received by the network device 1 to the compute function 14 operated by the network device 1 and to forward the processed specific network data 11.

In a step S5 the function orchestration module 8 may send the network function 17 and the compute function 14 to the network device 1.

In a step S6 the network device 1 may configure its programmable forwarding plane 7 to operate the network function 17. The network device 1 may also initiate the operation of the compute function 14.

In a step S7 the network device 1 may receive the specific network data 11 at the programmable forwarding plane 7 of the network device 1. The programmable forwarding plane 7 may provide the network data 11 to the compute function 14 operated by the network device 1.

In a step S8 the compute function 14 may process the network data 11 according to the data processing specification 10.

In a step S9 the processed network data 11 may be provided to the programmable forwarding plane 7 by the compute function 14 and the programmable forwarding plane 7 may forward the process network data 11 using the network function 17.

In an example scenario, a source device 20 like a user application collects data and sends it in network data 21 to a target device 21 like a backend over multiple network devices 1. The user application wants the collected data to be processed according to a set of instructions in a data processing specification 10. The processing may be called a compute function 14 with a defined input and a defined output. The network device 1 on the network path 22 from the user application to the backend supports the proposed mechanism of processing and forwarding the network data 11.

While setting up the communication service, the user application interacts with the function orchestration module 8 to set up the network devices 1 to execute the required compute function 14 for data processing in parallel.

In detail, the proposed mechanism works as follows:
The user application of the source device 20 may provide the characteristics of a required compute function 14 to be executed on the network data 11 transmitted to the backend as a target device 21 via network device 1. The function orchestration module 8 can identify a suitable function template in the function repository module 13 that matches the requested characteristics. The function orchestration module 8 can identify an appropriate network device 1 that can be used to execute the compute function 14 based on the network data 11. In addition, it can interact with the authentication, authorization, and accounting module 15 to ensure that only the defined network 9 packets can be processed with the defined compute function 14. The function orchestration module 8 can generate and deploy an appropriate network function 17. The function orchestration module 8 can deploy the compute function 14 and network function 17 to the identified network device 1 via a function deployment interface 18 with the following steps: It creates and then deploys a function instance to an appropriate network device 1. It creates and then deploys an appropriate network function 17 to an appropriate network device 1.

Advantages of the proposed mechanism include dynamic creation and deployment of the compute function 14 required for data processing at run-time or on-demand as communication services are initiated or modified. Compute functions 14 can be created based on templates or by the application creating the data communication service. The function orchestration module 8 can be implemented as a function/library for a network controller instance or as a feature of network 9 planning and management software. A data processing function can be modified at run time. The compute function 14 is not limited to processing network data 11 from only one traffic flow. The function orchestration module 8 and the programmable forwarding plane 7 can interact with the authentication, authorization, and accounting module to ensure that the right packets are processed by the right compute function 14. The function orchestration module 8 can identify the most appropriate network device 1 as the in-network 9 processing device based on function and user application requirements.

## Claims

1. Method to configure a network (9) for in-network (9) computing of network data (11), comprising the following steps performed by a function orchestration module (8) of the network (9):
- receiving a data processing specification (10), wherein the data processing specification (10) describes a processing to be performed on specific network data (11) along a network path (22) of the network (9);
- generating a compute function (14) for a network device (1), configured to process the specific network data (11) according to the data processing specification (10);
- selection of the network device (1) of the network (9) along the network path (22) to operate the compute function (14) ;
- generating a network function (17) for the network device (1), wherein the network function (17) is configured to forward the specific network data (11) received by the network device (1) to the compute function (14) operated by the network device (1) and to forward the processed specific network data (11) to the network (9); and
- providing the compute function (14) and the network function (17) to the network device (1).

2. Method according to claim 1, **characterised in that** the data processing specification (10) describes the processing to be performed on the specific network data (11), sent from at least two of the source devices (20) to the target device (21) via the network device (1) of the network (9).

3. Method according to claim 1 or 2, **characterised in that** the data processing specification (10) describes the processing to be performed on the specific network data (11), sent from the source device (20) to at least two of the target devices (21) via the network device (1) of the network (9) .

4. Method according to any of the preceding claims, comprising the step of:
- configuring an authentication, authorization, and accounting module (15) of the network (9), to set up a security mechanism for restricting access to the specific network data (11); and
- providing a security configuration (16) to the compute function (14) to solve the security mechanism to gain access to the specific network data (11) restricted by the security mechanism.

5. Method according to any of the preceding claims, **characterised in that** the generating of the compute function (14) comprises steps of:
- retrieving from a function repository module (13) a compute function template (12) according to the data processing specification (10); and
- configuring the compute function template (12) according to the data processing specification (10); and
- generating the compute function (14) based on the configured compute function template (12).

6. Method according to any of the preceding claims, **characterised in that** the compute function (14) is configured as an application running in an operation system (5) of the network device (1).

7. Method according to any of the preceding claims, **characterised in that** the compute function (14) is configured as an application running on a data processing unit (19) of a network interface card (3) of the network device (1).

8. Method according to any of the preceding claims, **characterised in that** the selection of the network device (1) depends on a network load caused by the operation of the compute function (14) on the network device (1).

9. Method to operate a network device (1) for in-network computing of network data (11), comprising the following steps performed by a network device (1) of the network (9):
- receiving specific network data (11) by a programmable forwarding plane (7) of the network device (1);
- forwarding the specific network data (11) to a compute function (14) operated by the network device (1) by a network function (17) of the programmable forwarding plane (7);
- processing the specific network data (11) by the compute function (14); and
- providing the processed specific network data (11) to the programmable forwarding plane (7); and
- forwarding the processed specific network data (11) to the network (9) by the network function (17) of the programmable forwarding plane (7).

10. Function orchestration module (8) for a network (9), configured to:
- receive a data processing specification (10), wherein the data processing specification (10) describes a processing to be performed on specific network data (11), along a network path (22) of the network (9);
- generate a compute function (14) for a network device (1), configured to process the specific network data (11) according to the data processing specification (10);
- select the network device (1) of the network (9) along the network path (22) to operate the compute function (14);
- generate a network function (17) for the network device (1), wherein the network function (17) is configured to forward the specific network data (11) received by the network device (1) to the compute function (14) operated by the network device (1) and to forward the processed specific network data (11) to the network (9); and
- provide the compute function (14) and the network function (17) to the network device (1).

11. Network device (1) for a network (9), configured to
- receive specific network data (11) by a programmable forwarding plane (7) of the network device (1);
- forward the specific network data (11) to a compute function (14) operated by the network device (1) by a network function (17);
- process the specific network data (11) by the compute function (14);
- provide the processed specific network data (11) to the programmable forwarding plane (7);
- forward the processed specific network data (11) by the network function (17).

12. Network (9), comprising a function orchestration module (8) according to claim 10 and a network device (1) according to claim 11.

13. A computer program product comprising program code for performing a method according to any one of the claims 1 to 8 or claim 9.

14. A computer-readable storage medium comprising at least the computer program product according to claim 13.
